(19) Europäisches Patentamt

European Patent Office

Office européen des brevets

(11) **EP 1 655 946 A1**

(12) **EUROPÄISCHE PATENTANMELDUNG**

(43) Veröffentlichungstag:
   **10.05.2006 Patentblatt 2006/19**

(51) Int Cl.:
   ***H04N 1/028*** *(2006.01)*

(21) Anmeldenummer: **04025620.8**

(22) Anmeldetag: **28.10.2004**

(84) Benannte Vertragsstaaten:
   **AT BE BG CH CY CZ DE DK EE ES FI FR GB GR
   HU IE IT LI LU MC NL PL PT RO SE SI SK TR**
   Benannte Erstreckungsstaaten:
   **AL HR LT LV MK**

(71) Anmelder: **GretagMacbeth AG
   8105 Regensdorf (CH)**

(72) Erfinder:
   • **Ehbets, Peter
     8046 Zürich (CH)**
   • **Kohlbrenner, Adrian
     8800 Thalwil (CH)**

(74) Vertreter: **Schwabe - Sandmair - Marx
   Stuntzstrasse 16
   81677 München (DE)**

(54) **Abtastvorrichtung zur fotoelektrischen Ausmessung eines Messobjekts**

(57)  Eine Abtastvorrichtung zur bildelementweisen fotoelektrischen Ausmessung eines Messobjekts in Form eines Druckbogens umfasst einen Messtisch (MT) zur Auflage des Messobjekts, eine über die Oberfläche des Messtischs bewegbare Messeinrichtung zur Abtastung von Bildelementzeilen des Messobjekts, eine Antriebseinrichtung, zur Bewegung der Messeinrichtung über das Messobjekt, eine Mess- und Antriebssteuerung für die Messeinrichtung und die Antriebseinrichtung und eine Verarbeitungseinrichtung, um die von der Messeinrichtung erzeugten Messsignale aus den abgetasteten Bildelementen des Messobjekts (S) aufzubereiten und auszuwerten. Die Messeinrichtung umfasst eine Beleuchtungseinrichtung (10), eine fotoelektrische Empfängereinrichtung (20) und Optikmittel (30). Die Beleuchtungseinrichtung (10) beaufschlagt in einem streifenförmigen Beleuchtungsbereich (15) befindliche Bildelemente unter einem definierten Einfallswinkelbereich. Die fotoelektrische Empfängereinrichtung (20) weist mehrere parallel im Abstand angeordnete fotoelektrische Zeilensensoren (21-24) auf, die durch vorgeschaltete Farbfilter (25-28) auf unterschiedliche Wellenlängenbereiche sensibilisiert sind. Die Optikmittel (30) weisen linienförmigen Optikanordnungen (31-34) auf, die von den Bildelementen reemittiertes Messlicht unter einem definierten Ausfallswinkelbereich auffangen und auf je einen der Zeilensensoren (21-24) lenken. Mittels einer strukturierten Ausleuchtung des Beleuchtungsbereichs (15) und durch weitere konstruktive Massnahmen werden Übersprecheffekte zwischen benachbarten Bildelementen weitgehend reduziert.

Die Abtastvorrichtung erlaubt die Abtastung ganzer Druckbögen mit hoher Geschwindigkeit und ist konstruktiv vergleichsweise wenig aufwändig. Sie vereinigt in sich die Vorteile der von Bilderfassungsgeräten bekannten Technologien, ohne jedoch deren inhärente Nachteile aufzuweisen. Sie ist damit für Qualitätskontrollanwendungen in der grafischen Industrie und für die farbmetrische Steuerung von Druckprozessen geeignet.

Fig. 1

EP 1 655 946 A1

**Beschreibung**

Die Erfindung betrifft eine Abtastvorrichtung zur bildelementweisen fotoelektrischen Ausmessung eines Messobjekts, insbesondere eines vorzugsweise mehrfarbig bedruckten Druckbogens.

Abtastvorrichtungen dieser Art werden im allgemeinen als Scanner bezeichnet. Sie werden z.B. in der grafischen Industrie zur Qualitätskontrolle und zur Steuerung von Druckprozessen eingesetzt.

Eine erste bekannte Art von herkömmlichen Scannern weist einen einzelnen Messkopf auf, der in einer oder in zwei Dimensionen relativ zum Messobjekt - in der Regel einem Druckbogen - bewegt werden kann. Im Falle einer eindimensionalen Beweglichkeit des Messkopfs ist das Messobjekt in der anderen Dimension beweglich. Der Messkopf tastet jeweils einen kleinen Bereich des Messobjekts, ein sog. Bildelement oder Pixel, fotoelektrisch ab, wobei jedes abzutastende Bildelement durch entsprechende Bewegung des Messkopfs bzw. des Messobjekts einzeln angefahren wird. Die Abtastung kann dabei densitometrisch, farbmetrisch oder spektral erfolgen, wobei entsprechende Messsignale erzeugt werden, die dann zur Verarbeitung und/oder Auswertung zur Verfügung stehen. Ein wesentlicher Nachteil dieser bekannten Scanner ist in dem durch das einzelne Anfahren der zu messenden Bildelemente bedingten hohen Zeitaufwand für die vollständige Abtastung eines Druckbogens üblicher Grösse zu sehen, wodurch sie für den Einsatz zur automatischen Steuerung bzw. Regelung von modernen Druckmaschinen in der Regel ungeeignet sind.

Eine zweite bekannte Art von herkömmlichen Scannern ist z.B: in der US-A 6,028,682 beschrieben. Diese gattungsgemässen Scanner sind mit einem Messwagen ausgestattet, der sich in einer Dimension quer über einen Messtisch erstreckt und motorisch angetrieben in der zweiten Dimension über den Messtisch verfahrbar ist. Im Messwagen befindet sich ein langgestreckter Messbalken, der eine grosse Anzahl von in einer geraden Reihe angeordneten Messköpfen enthält. Beim Bewegen des Messwagens über den Messtisch tastet jeder Messkopf das Messobjekt längs einer eigenen Abtastspur ab. Die Messköpfe sind als reine Beleuchtungs- und Aufpickanordnungen ausgestaltet und werden über je einen optischen Lichtleitermultiplexer zeitsequentiell mit einer Lichtquelle und einem Spektrometer verbunden. Diese bekannten Scanner sind zwar schon deutlich schneller als die vorstehend erwähnten Scanner mit Einzelmesskopf und auch für Anwendungen zur farbmetrischen Steuerung eines Druckprozesses geeignet, sie sind aber einerseits immer noch relativ langsam und anderseits mechanisch bzw. optisch extrem aufwändig.

Ausgehend von dem durch die US-A 6.028,682 gegebenen Stand der Technik soll durch die vorliegende Erfindung nun eine Abtastvorrichtung der gattungsgemässen Art hinsichtlich Abtastgeschwindigkeit und Konstruktionsaufwand verbessert werden, wobei gleichzeitig die Eignung für Qualitätskontrollzwecke in der grafischen Industrie und für die farbmetrische Steuerung von Druckprozessen erhalten bleiben soll.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Für die Bilderfassung, d.h. Digitalisierung von Dokumenten und analogen körperlichen Vorlagen, sind anderseits Scanner bekannt, die mit Zeilenabtastern ausgestattet sind, welche jeweils die Bildelemente einer ganzen Bildzeile auf einmal fotoelektrisch ausmessen können. Je nach Bauart wird dabei entweder der Zeilenabtaster über die ortsfeste Vorlage oder die Vorlage quer zum ortsfesten Zeilenabtaster bewegt, um Zeile für Zeile die gesamte Vorlage abzutasten und dann zu digitalisieren. Der Zeilenabtaster umfasst eine linienförmige Lichtquelle, die jeweils eine ganze Bildzeile simultan beleuchtet, und eine linienförmige Sensorzeile aus einer grossen Anzahl von Einzelsensoren, denen das vom Messobjekt remittierte Licht über eine ebenfalls linienförmige optische Anordnung zugeführt wird. Die maximale räumliche Auflösung ist theoretisch durch die Grösse der Einzelsensoren gegeben, wird aber in der Praxis durch Streulicht- bzw. Übersprecheffekte mehr oder weniger reduziert. Die Farbseparation erfolgt entweder zeitsequentiell dadurch, dass zur Beleuchtung der Bildzeile mehrere verschiedenfarbige Lichtquellen (meist rot, blau, grün) oder eine farblich umschaltbare Lichtquelle eingesetzt wird, oder dass bei im wesentlichen weissem Beleuchtungslicht mehrere Sensorzeilen parallel eingesetzt werden, die jeweils Licht unterschiedlicher Wellenlängenbereiche (rot, blau, grün) empfangen, was z.B. durch geeignete Vorschaltfilter erreicht werden kann. Als Lichtquellen werden häufig Licht emittierende Dioden (LED) oder Leuchtstofflampen eingesetzt. Als Sensorzeilen sind zwei verschiedene Anordnungen üblich. Bei der ersten Anordnung, dem sog. Contact Image Sensor (CIS), wird die Bildzeile mit aneinandergereihten Gradientenindex-Linsen (sog. Selfoc Arrays) im Massstab 1:1 auf die optoelektronische Detektorzeile abgebildet, wobei die Detektorzeile aus nahtlos aneinandergereihten optoelektronischen Liniendetektoren (z.B. Photodioden-Arrays) besteht. Die Breite der Detektorzeile ist hierbei mit der Breite der abzutastenden Bildzeile identisch. Bei der zweiten Anordnung wird die Bildzeile über ein Objektiv auf die Detektorzeile abgebildet, wobei häufig eine verkleinernde optische Anordnung gewählt wird, beispielsweise eine Abbildung im Massstab 1:4. Dies ermöglicht insbesondere, dass die Breite der Detektorzeile kleiner als die Breite der Bildzeile sein kann. Bei genügender Verkleinerung ist es dadurch insbesondere möglich, die Detektorzeile aus einem einzigen, d.h. nicht zusammengesetzten, optoelektronischen Liniendetektor aufzubauen.

Die bekannten Scanner dieser letztgenannten Art sind zwar sehr schnell und für Bilderfassungszwecke im allgemeinen völlig ausreichend. Wenn die Bildelemente des Messobjekts jedoch mit hoher Präzision farbmetrisch ausgemessen werden müssen, was bei Anwendungen der Qualitätskontrolle und Druckprozesssteuerung in der Regel unabdingbar ist, dann sind solche Scanner nicht geeignet. Dies liegt einerseits an den bei diesen Scannern auftretenden Übersprecheffekten zwischen der einzelnen Bildelementen und andererseits daran, dass diese Scanner nicht für echte Farbmessung ausgelegt sind. Ein wichtiger Punkt für korrekte Farb- und Dichtemesswerte ist die Einhaltung der normierten 45°/0° Messgeometrie (z.B. DIN 165361, Teil 2), welche die Beleuchtungs- und Sammelwinkel festlegt und nur kleine Aperturwinkel (<5°) zulässt. Kommerziell erhältliche Bildscanner beider Varianten (CIS und Abbildungsoptik) erfüllen diese geometrischen Messbedingungen nicht.

Im folgenden wird die Erfindung anhand der Zeichnung näher erläutert. Es zeigen:

Fig. 1     eine vereinfachte Gesamtansicht eines Ausführungsbeispiels der erfindungsgemässen Abtastvorrichtung,

Fig. 2     einen teilweisen Längsschnitt parallel zur Koordinatenebene y-z durch den Messwagen der Abtastvorrichtung,

Fig. 3     eine Prinzipskizze der im Messwagen angeordneten Messeinrichtung,

Fig. 4     eine Detailskizze zum Aufbau von in der Messeinrichtung eingesetzten Sensorzeilen,

Fig. 5     eine Detailskizze zum Aufbau von in der Messeinrichtung eingesetzten sog. Selfoc-Arrays,

Fig. 6     ein Prinzipblockschema der Mess- und Steuerelektronik der Abtastvorrichtung,

Fig. 7     eine stark vereinfachte Detailskizze zu Aspekten der Übersprechverminderung,

Fig. 8     eine Detailskizze zur strukturierten Beleuchtung des Messobjekts,

Fig. 9     eine Variante analog Fig. 8,

Fig. 10    eine Detailskizze einer Realisierungsvariante der strukturierten Beleuchtung,

Fig. 11    eine Prinzipskizze einer weiteren Realisierungsvariante der strukturierten Beleuchtung,

Fig. 12    ein typisches Spektrum einer weissen LED-Lichtquelle,

Fig. 13    Durchlasskurven von typischen geeigneten Farbfiltern,

Fig. 14    ein Beispiel für den modularen Aufbau der Messeinrichtung,

Fig. 15    ein alternatives Beispiel analog Fig. 14,

Fig. 16    ein weiteres Ausführungsbeispiel der erfindungsgemässen Abtastvorrichtung mit einem zusätzlichen Spektralmesskopf,

Fig. 17    ein Blockschema zur Messwertumrechnung und

Fig. 18    eine Detailskizze zum Aufbau einer in der Messeinrichtung eingesetzten alternativen Abbildungsoptik mit Objektiv (hier gezeigt mit telezentrischer Korrekturlinse und optischer Verkleinerung der Bildzeile).

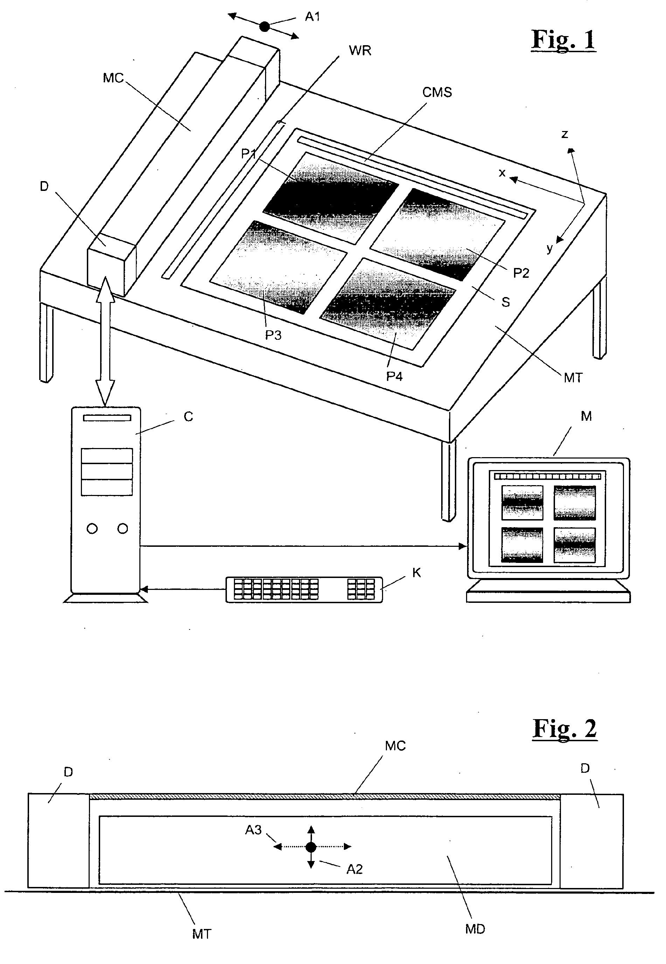

Die erfindungsgemässe Abtastvorrichtung entspricht in ihrem generellen Aufbau den üblichen Messapparaturen, wie sie z.B. in der grafischen Industrie typischerweise zur punktweisen fotoelektrischen Ausmessung von einem Druckprozess entnommenen Druckbögen verwendet werden. Die Abtastvorrichtung umfasst einen Unterbau in Form eines Messtischs MT mit üblicherweise geneigter rechteckiger Oberfläche, auf der das Messobjekt S - der auszumessende Druckbogen — positioniert werden kann. Der Druckbogen S enthält typischerweise einige (hier vier) grafische Darstellungen P1-P4 und einen (oder mehrere) Farbmessstreifen CMS. Zur Positionierung des Messobjekts S sind am Messtisch MT nicht dargestellte Anschläge vorgesehen. Die Fixierung des Messobjekts S auf dem Messtisch MT erfolgt vorzugsweise auf elektrostatischem Wege oder mittels bekannter Saugmechanismen. Auf dem Messtisch MT ist ein länglicher Messwagen MC angeordnet, auf bzw. in dem sich eine Messeinrichtung MD (Fig.2) befindet. Der Messwagen MC erstreckt sich über die Tiefe des Messtischs MT in Koordinatenrichtung y und ist motorisch über dessen Breite in Koordinatenrichtung x linear hin und her beweglich, wobei entsprechende Antriebs-und Steuereinrichtungen am Messwagen MC und am bzw. unter dem Messtisch MT vorgesehen sind. Die Antriebseinrichtung ist in der Zeichnung nur

symbolisch durch das Bezugzeichen D angedeutet, die Beweglichkeit des Messwagens MC in x-Richtung durch den Pfeil A1. Innerhalb des Messwagens MC ist die eigentliche Messeinrichtung MD mittels nicht dargestellter konventioneller Antriebseinrichtungen in Richtung der Koordinatenachse z relativ zur Messtischoberfläche heb- und senkbar und in bestimmten Ausführungsvarianten ausserdem noch in Richtung der Koordinatenachse y (beschränkt) verfahrbar. Diese beiden Bewegungsmöglichkeiten sind in Fig. 2 durch die Pfeile A2 und A3 symbolisiert.

Auf dem Messtisch MT befindet sich parallel zum Messwagen MC eine Weissreferenz WR. Diese dient der Kalibrierung der Messeinrichtung MD. Die Kalibrierung wird typischerweise vor jedem Messlauf durchgeführt, indem die Messeinrichtung MD die Weissreferenz ausmisst. Die Weissreferenz wurde zuvor (typischerweise im Werk) mit Hilfe eines externen Gerätes ausgemessen und die Messwerte im Speicher des Scanners, in der Regel im Rechner C, hinterlegt. Eine solche Kalibrierung ist bei Spektralphotometern üblich und als solche Stand der Technik, allerdings wird sie hier, wie weiter unten noch detaillierter erläutert, in y-Richtung ortsabhängig durchgeführt.

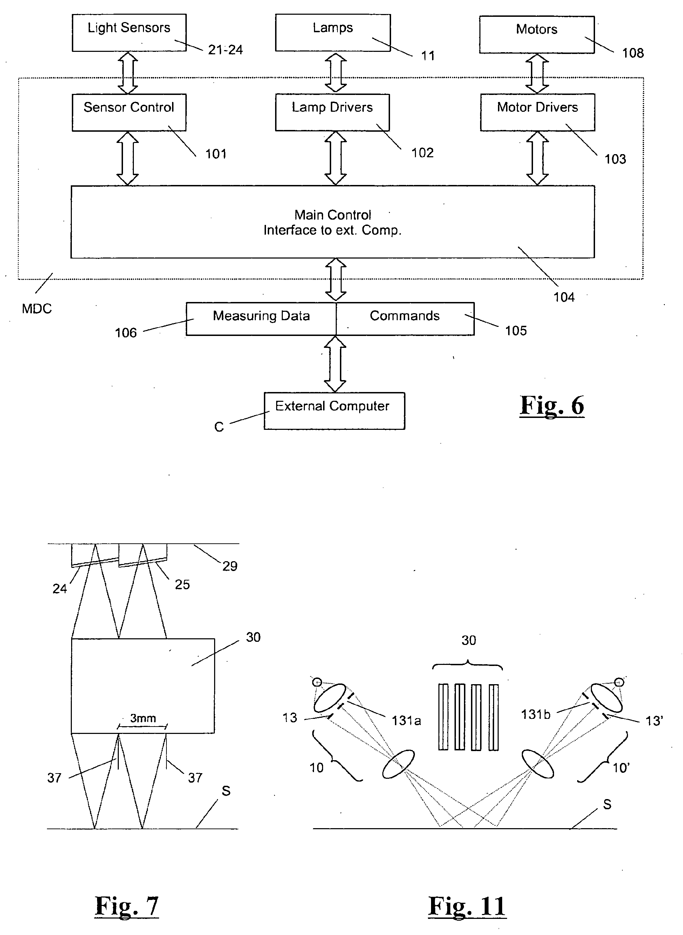

Die Abtastvorrichtung umfasst ferner noch eine Verarbeitungseinrichtung in Form eines externen Rechners C mit einer Tastatur K und einem Farbmonitor M. Der Rechner C arbeitet mit einer Mess- und Antriebssteuerung MDC (Fig. 6) am Messtisch MT bzw. im Messwagen MC zusammen und verarbeitet die von der im Messwagen MC befindlichen Messeinrichtung MD erzeugten und ihm über die Mess- und Antriebssteuerung MDC zugeführten Messsignale, wobei er unter anderem auch die Bildinformation des abgetasteten Messobjekt S auf dem Monitor M darstellen kann. Der Rechner C kann über die Mess- und Antriebssteuerung MDC ferner auch die Bewegungen des Messwagens MC und der darin befindlichen Messeinrichtung MD veranlassen und steuern. Die Abtastvorrichtung entspricht soweit dem bekannten Stand der Technik, wie er z.B. durch kommerziell erhältliche Geräte der Firma Heidelberger Druckmaschinen AG oder durch die US-A 6,028,682 (entsprechend DE-A-196 50 223) gegeben ist. Der mechanische Aufbau und die Realisierung der motorischen Verfahrbarkeit von Messwagen MC und Messeinrichtung MD sind in der USA 6,028,682 detailliert beschrieben, so dass der Fachmann diesbezüglich keiner weiteren Erläuterung bedarf. Es versteht sich, dass der Messwagen MC auch parallel zur Koordinatenrichtung x angeordnet sein kann, wobei dann alle anderen Ausrichtungen und Bewegungsrichtungen sinngemäss ebenfalls um 90° gedreht wären.

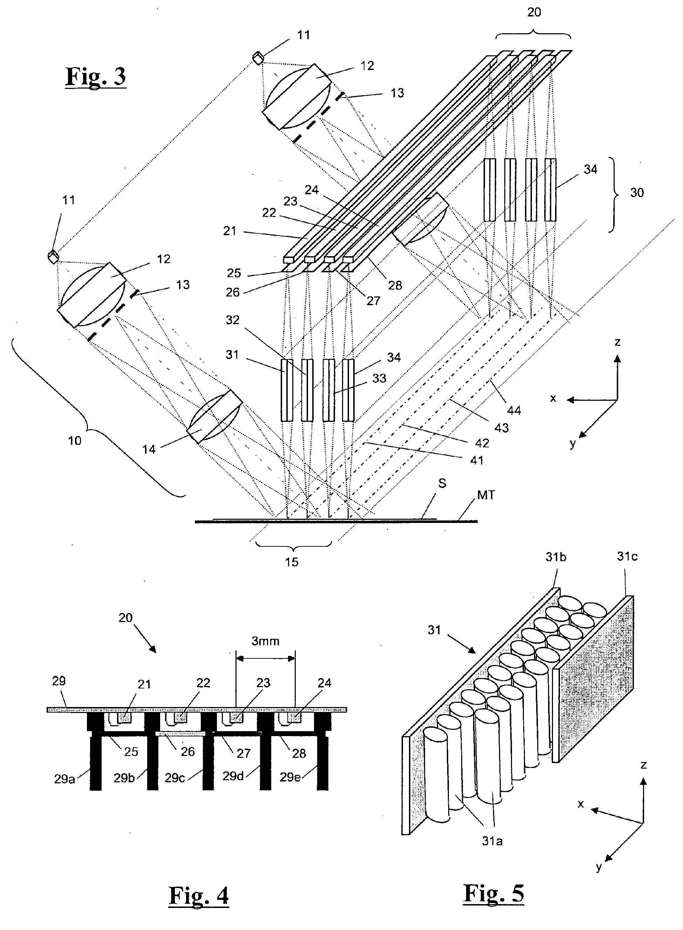

Die Fig. 3 zeigt den prinzipiellen Aufbau der im Messwagen MC befindlichen Messeinrichtung MD. Die Messeinrichtung bildet insgesamt einen Zeilen-Scanner und umfasst als wesentlichste Bestandteile eine Beleuchtungseinrichtung 10, eine fotoelektrische Empfängereinrichtung 20 und Optikmittel 30.

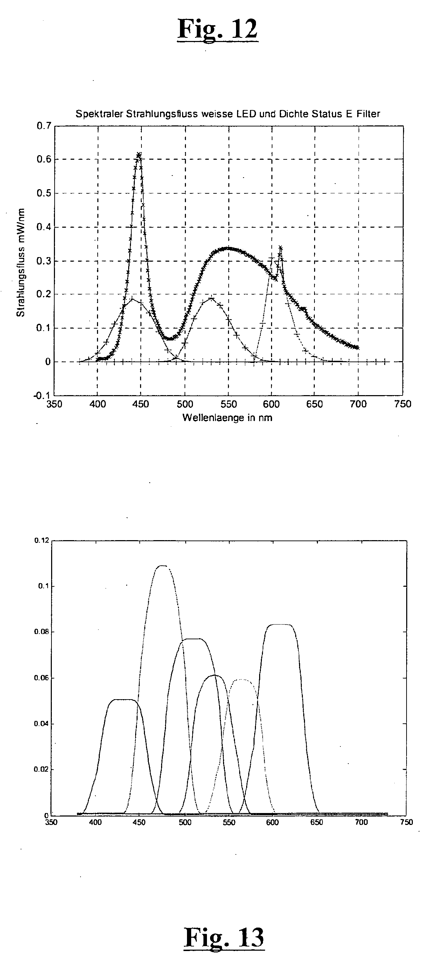

Die Beleuchtungseinrichtung 10 umfasst eine grössere Anzahl von Lichtquellen 11 in Form von im wesentlichen weiss strahlenden Leuchtdioden, welche in y-Richtung linear aneinandergereiht sind. Sie umfasst ferner pro Lichtquelle 11 je eine Kollimatorlinse 12, eine Maske 13 und eine Abbildungslinse 14, welche die Maske 13 auf die Oberfläche des Messtischs MT bzw. des darauf liegenden Messobjekts abbildet. Die Kollimatorlinsen 12, die Masken 13 und die Abbildungslinsen 14 sind vorzugsweise wie die Leuchtdioden 11 baulich je zu linearen Aneinanderreihungen (Arrays) zusammengefasst. Die Beleuchtungseinrichtung 10 beaufschlagt das Messobjekt S innerhalb eines streifenförmigen, in Längsrichtung parallel zur y-Koordinate verlaufenden und sich wenigstens über einen Teil des Messobjekts S erstreckenden Beleuchtungsbereich 15 mit Beleuchtungslicht. Die Anordnung ist dabei so getroffen, dass jedes innerhalb des Beleuchtungsbereichs 15 liegende abzutastende Bildelement des Messobjekts S unter einem definierten, für die Farbmessung geeigneten Einfallswinkel (typischerweise 45° +/- 5°) mit Beleuchtungslicht beaufschlagt wird. Für die Leuchtdioden 11 kann beispielsweise der Typ Luxeon DS 25 der Firma Lumileds Lighting LLC, San Jose, CA, USA eingesetzt werden. Das typische Emissionsspektrum solcher weisser Leuchtdioden ist im Diagramm der Fig. 12 dargestellt. Zum Vergleich ist auch der Dichteverlauf von Status E Filtern in das Diagramm eingetragen.

Eine einfachere Bauform wird für die LED Linienbeleuchtung erreicht, wenn für jede Leuchtdiode nur eine Kollimationslinse verwendet wird. Die Kollimationslinse erzeugt einen parallelen Strahlengang. Die Brennweite der Linse wird so gewählt, dass der Divergenzwinkel des kollimierten Strahlengangs kleiner gleich 5° beträgt. Diese Implementierung ermöglicht eine uniforme durchgehende Linienbeleuchtung. Die weiter unten erläuterte Möglichkeit zur strukturierten Beleuchtung entfällt. Die einfachere Bauform ist anwendbar, wenn die Anforderungen an Streulicht und Ubersprechen nicht so hoch sind. Die einfachere Bauform ist in Kombination mit einer rechnerischen Korrektur des optischen Übersprechens interessant. Dieses Verfahren wird weiter unten noch genauer beschrieben.

Die fotoelektrische Empfängereinrichtung 20 umfasst eine Anzahl (im gezeigten Beispiel vier) Zeilensensoren 21-24, die durch vorgeschaltete Farbfilter 25-28 auf unterschiedliche Wellenlängenbereiche sensibilisiert sind, d.h. Licht unterschiedlicher Wellenlängenbereiche empfangen. Jeder Zeilensensor besteht aus einem oder mehreren sog. CIS-Elementen (contact image sensor), die wiederum je auf einem Chip in einer geraden Zeile integriert eine grosse Anzahl von einzelnen Lichtsensoren enthalten. Ein geeignetes CIS-Element ist z.B. der Typ PI6045J der Firma Peripheral Imaging Corporation, San Jose, CA, USA mit einer Auflösung von 600 dpi. Die Fig. 4 zeigt, wie die vier Zeilensensoren 21-24 vorzugsweise auf einer gemeinsamen Leiterplatte 29 in einem gegenseitigen Abstand von typisch etwa 3mm montiert sind. Auf der Leiterplatte befestigte Zwischenwände 29a-29e dienen dabei einerseits als Träger für die Farbfilter 25-28 und anderseits zur optischen Trennung der Strahlengänge. Die Zwischenwände 29a-29e können auch direkt bis an die Austrittsfläche der weiter unten noch beschriebenen Selfoc Linsenarrays 31-34 realisiert werden. Dadurch wird eine optimale optische Trennung der verschiedenen Wellenlängen-Messkanäle (Sammelkanäle) ermöglicht.

Alternativ können die Farbfilter direkt auf die Zeilensensoren 21-24 oder, mit Hilfe von Abstandshaltern, auf die Leiterplatte 29 geklebt werden. Die optische Isolation der einzelnen Räume kann dabei durch Trennwände oder schwarzer Vergussmasse erreicht werden. Eine weitere Alternative besteht darin, die Filter direkt oder mit Abstandshaltern auf die Vorder- oder Rückseite der Optikanordnung zu kleben oder mit anderen bekannten Methoden zu befestigen.

Die Optikmittel 30 umfassen eine der Anzahl Zeilensensoren entsprechende Anzahl von linienförmigen Optikanordnungen 31-34, die vorzugsweise durch je eine lineare Anordnung von Gradientenindex-Linsen, sog. Selfoc-Linsen-Arrays, implementiert sind. Die linienförmigen Optikanordnungen 31-34 erstrecken sich wie die Zeilensensoren 21-24 parallel zur y-Koordinatenrichtung. Ein typischer Aufbau eines Selfoc-Linsen-Arrays 31 ist in Fig. 5 gezeigt. Dabei befinden sich zwei Reihen von Gradientenindex-Linsen 31a zwischen zwei äusseren Wänden 31b und 31c, wobei die Zwischenräume zwischen den Linsen-Fasern und den Wänden mit einem opaken Kunststoff vergossen sind. Geeignete Selfoc-Linsen-Arrays werden von der Firma NSG vertrieben.

Jede der linearen Optikanordnungen 31-34 lenkt das von den mit Beleuchtungslicht beaufschlagten Bildelementen des Messobjekts S remittierte Messlicht auf einen der Zeilensensoren 21-24. Die Optikanordnungen 31-34 sind dabei so ausgebildet und angeordnet, dass sie aus jedem abgetasteten Bildelement das remittierte Messlicht nur unter einem definierten, für Farbmessungen geeigneten Ausfallswinkelbereich auffangen (typischerweise 0° +/- 5°). Wie die Fig. 3 verdeutlicht, empfängt jeder der Zeilensensoren 21-24 Messlicht aus unterschiedlichen, in y-Richtung verlaufenden Bildelementzeilen 41-44 des Messobjekts S. Durch Bewegen des Messwagens MC und damit der Messeinrichtung MD in x-Richtung über das Messobjekt S werden aber alle Zeilensensoren 21-24 zeitlich sequentiell mit Messlicht aus allen Bildelementzeilen 41-44 beaufschlagt.

Der Strahlengang des Messlichts vom Messobjekt S bis hin zu den Sensorzeilen 21-24 ist gesamthaft als Sammelkanal bezeichnet. Der Sammelkanal kann alternativ auch mit konventioneller Abbildungsoptik realisiert werden. In diesem Fall wird anstelle der Selfoc-Arrays ein Objektiv verwendet, welches einen Abschnitt der Abtastzeile von zirka 200 mm Längen in ein verkleinertes Bild scharf abbildet. Es kann ein Abbildungsmassstab von 0.25 verwendet werden, so dass die Bildlänge des Abtastzeilenabschnitts 50 mm beträgt. In der Bildebene wird dann die gleiche Messeinheit wie beim vorstehend beschriebenen Ausführungsbeispiel mit den verschiedenen Zeilensensoren 21-24 und den dazugehörenden Filtern plaziert. Die komplette Erfassung der gesammten Abtastzeilenlänge mit einem Scandurchgang kann durch Aneinanderreihen von mehreren solchen Abbildungsmodulen erreicht werden.

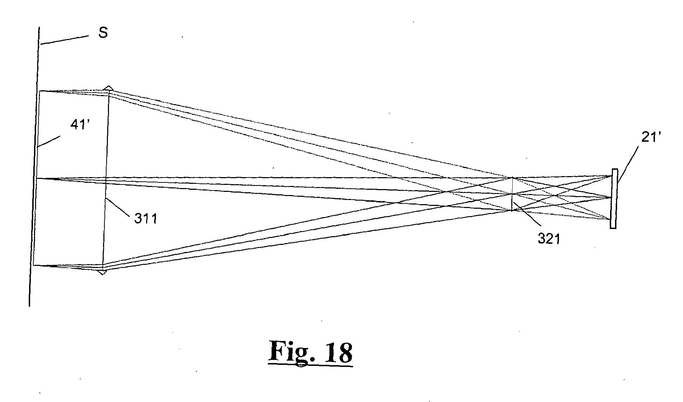

Die Figur 18 zeigt schematisch die Realiserung der Abbildungsoptik des Sammelkanals, bei dem ein Abtastzeilenabschnitt 41' auf einen Zeilensensorabschnitt 21' abgebildet wird. Eine wichtige Bedingung für korrekte Farb- und Dichtemesswerte ist, dass die Messwinkel der Lichtstrahlen im Sammelkanal über die gesammte Linienlänge konstant sind und der Hauptstrahl für jeden Objektpunkt 0° beträgt. Dies entspricht der normierten Messgeometrie für die Farb- und Dichtemesstechnik. Die Realiserung eines solchen Strahlengangs erfordert den Einsatz eines telezentrischen Objektivs mit objektseitigem oder beidseitigem telezentrischen Strahlengang, wie sie zum Beispiel von der Firma Schneider Kreuznach angeboten werden. Eine interessante kostengünstige Realiserung wird durch die Kombination eines konventionellen photographischen Objektivs mit einer einfachen telezentrischen Feldlinse erreicht. Figur 18 zeigt diese Implementierung. Das Objektiv mit einer Brennweite von 100 mm ist schematisch als Linie 321 dargestellt. Die telezentrische Linse wird durch eine ebenfalls nur schematisch als Doppelpfeil dargestellte einfache Bikonvexlinse 311 mit einer Brennweite von 470 mm realisiert. Die Bikonvexlinse erzeugt im Bild chromatische Abbildungsfehler. Da jede Sensorzeile aber durch den entsprechenden Filter nur Licht eines relativ engen Wellenlängenbereichs erhält, sind diese Abbildungsfehler tolerierbar. Die Verzeichnung kann für jeden Wellenlängenkanal messtechnisch anhand von periodischen Strukturen bestimmt werden. Sie wird numerisch korrigiert, bevor die Bilddaten der verschiedenen Wellenlänge zusammen gesetzt werden.

In der Fig. 6 ist die Mess- und Antriebssteuerung MDC in Form eines groben Blockschemas dargestellt. Sie umfasst eine Sensorsteuerung 101, eine Lampensteuerung 102 und eine Antriebssteuerung 103 sowie eine Hauptsteuerung 104, die mit den anderen drei Steuerungen zusammenarbeitet und gleichzeitig auch die Verbindung zum externen Rechner C herstellt. Die Sensorsteuerung 101 liest die Messwerte aus den Zeilensensoren aus, die Lampensteuerung 102 steuert die Lichtquellen in der Beleuchtungseinrichtung, und die Antriebssteuerung 103 steuert Antriebsmotoren 108 für die Bewegung des Messwagens bzw. der darin befindlichen Messeinrichtung MD in die drei Bewegungsrichtungen x, y, und z. Die Hauptsteuerung 104 koordiniert und kontrolliert die drei übrigen Steuerungen auf einer übergeordneten Ebene und stellt gleichzeitig auch die Verbindung zum externen Rechner C her. Die Hauptsteuerung 104 nimmt vom externen Rechner C Steuerbefehle 105 entgegen und sendet dem externen Rechner die von den Zeilensensoren erzeugten (digital aufbereiteten) Messwerte 106. Die Mess- und Antriebssteuerung MDC ist funktionell im Prinzip gleich wie bei den kommerziell erhältlichen Abtastgeräten dieser Art, wobei sich die für die Ansteuerung der Zeilensensoren und Leuchtdioden erforderlichen spezifischen Funktionen unmittelbar aus den Datenblättern der Hersteller dieser Elemente ergeben. Der Fachmann bedarf daher für die Implementierung der Mess- und Antriebssteuerung MDC keiner näheren Erläuterung.

Im Unterschied zur Bilderfassung stellen Übersprecheffekte bei farbmetrischen und densitometrischen Anwendungen ein grosses Problem dar. Es sind daher besondere Massnahmen bzw. Übersprechdämpfungsmittel erforderlich, um diese Überspreccheffekte so weit wie möglich zu reduzieren.

Eine erste Massnahme bzw. ein erstes Mittel besteht darin, dass die Strahlengänge des Messlichts für die einzelnen Farbkanäle gegenseitig abgeschottet werden. Dies kann z.B., wie die Fig. 7 zeigt, durch Trennwände 37 zwischen den einzelnen linienförmigen Optikanordnungen 31-34 erreicht werden. Diese Trennwände 37 können sich im Prinzip auch bis knapp an die Oberfläche des Messobjekts S erstrecken, so lange sie nicht das zur Beleuchtung der Bildelemente benötigte Licht der Beleuchtungseinrichtung abschatten. Durch die Trennwände wird das Übersprechen zwischen den einzelnen Zeilensensoren bzw. Farbkanälen reduziert. (In der Fig. 7 sind der Einfachheit halber die Strahlengänge von nur zwei Farbkanälen dargestellt.) Solche Trennwände werden mit Vorteil auch im detektorseitigen Raum zwischen der Optikanordnung und den Zeilensensoren, bzw. den dazugehörigen Farbfiltern angebracht. Eine weitere Funktion von Trennwänden dieser Art besteht darin, den Empfängerwinkel definiert zu limitieren, um damit gegebenenfalls den Winkel der Lichtstrahlen auf einen normgerechten Wert zu reduzieren.

Ein weiteres, ebenfalls aus Fig. 7 ersichtliches Übersprechdämpfungsmittel besteht darin, dass die den Zeilensensoren vorgeschalteten Farbfilter etwas schräg gestellt werden, wobei schräg hier eine Drehung aus der x-y-Ebene um die y-Achsenrichtung bedeutet. Durch diese Schrägstellung wird das Übersprechen in Längsrichtung der Zeilensensoren reduziert.

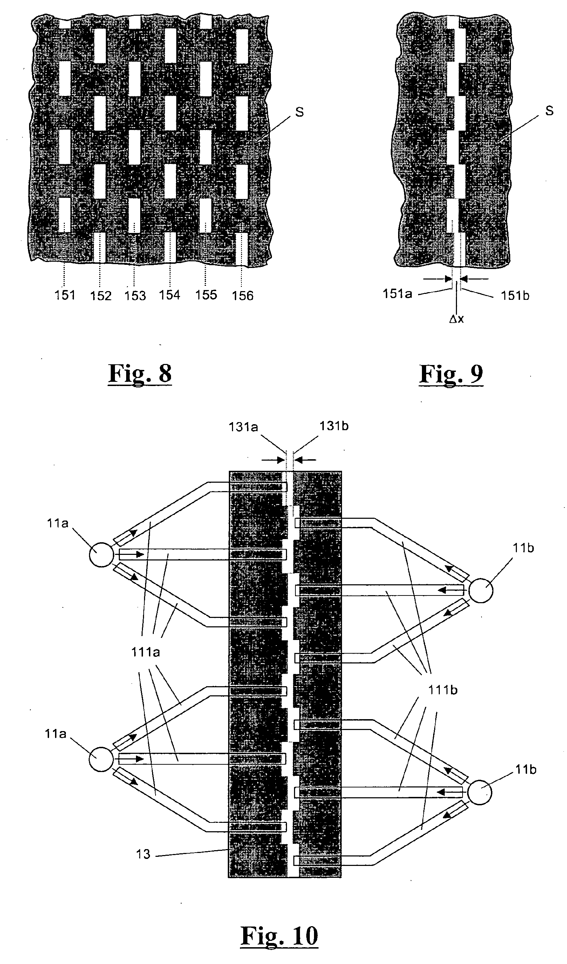

Eine besonders wichtige und wirksame Übersprechdämpfungsmassnahme wird im folgenden anhand der Figuren 8-10 erläutert. Sie besteht insgesamt in einer strukturierten Beleuchtung des Messobjekts S. Unter strukturierter Beleuchtung wird dabei verstanden, dass innerhalb des von der Beleuchtungseinrichtung 10 erfassbaren Beleuchtungsbereichs 15 nur eine der Anzahl von Zeilensensoren bzw. Farbkanälen entsprechende Anzahl von Beleuchtungszeilen mit Beleuchtungslicht beaufschlagt werden, wobei innerhalb jeder Beleuchtungszeile eine Hell-Dunkel-Struktur erzeugt wird, bei der sich beleuchtete und nicht beleuchtete Felder von der Grösse eines Bildelements oder eines Vielfachen davon abwechseln. De facto wird also nur die Hälfte der Bildelemente mit Beleuchtungslicht beaufschlagt. Die Fig. 8 verdeutlicht dies, wobei hier beispielsweise von sechs Farbkanälen mit entsprechend sechs Beleuchtungszeilen 151-156 ausgegangen wurde. Für optimale Übersprechdämpfung sind die hellen und dunklen Felder benachbarter Beleuchtungszeilen in Längsrichtung (y-Richtung) der Beleuchtungszeilen um ein Feld gegeneinander versetzt, stehen also gewissermassen auf Lücke. Die Breite der Beleuchtungszeilen 151-156, also deren Ausdehnung in x-Richtung, wird dabei so gewählt, dass sie in etwa der Breite der lichtempfindlichen Zonen der Zeilensensoren 21-24 entsprechen. Bei einer 1:1 Abbildung ist also die Breite einer Beleuchtungszeile und die Breite der lichtempfindlichen Zone eines Zeilensensors praktisch identisch. Durch diese Abdunkelung der Gebiete zwischen den Beleuchtungszeilen wird erreicht, dass das Messobjekt S nur mit Beleuchtungslicht beaufschlagt wird, welches von den Zeilensensoren im Rahmen des nutzbringenden Strahlengangs des Lichtes überhaupt detektiert werden kann.

Es ist klar, dass mit dieser strukturierten Beleuchtung in einem Messlauf (Bewegung des Messwagens MC und damit der Messeinrichtung MD in x-Richtung über das Messobjekt S) nur die Hälfte der Bildelemente des Messobjekts abgetastet werden können. Um auch die andere Hälfte abzutasten, wird die Messeinrichtung MD um die Grösse eines halben Hell-Dunkel-Struktur Paars in y-Richtung versetzt und dann ein zweites Mal in x-Richtung über das Messobjekt S geführt, wobei dies z.B. im Rücklauf des Messwagens MC erfolgen kann.

Die Fig. 9 zeigt eine alternative Möglichkeit der strukturierten Beleuchtung, bei der für die vollständige Abtastung des Messobjekts S nur ein einziger Messlauf erforderlich ist. Der Einfachheit halber sind in Fig. 9 die Verhältnisse für nur einen Farbkanal dargestellt. Bei dieser Ausführungsform werden zeitlich versetzt zwei Sätze von hell-dunkel-strukturierten Beleuchtungszeilen erzeugt. Zuerst wird ein Satz von ersten Beleuchtungszeilen (in der Fig. 9 ist nur die Beleuchtungszeile 151a gezeigt) erzeugt, dann mit geringem zeitlichen Abstand ein Satz von zweiten Beleuchtungszeilen (in der Fig. 9 ist nur die Beleuchtungszeile 151b gezeigt). Die ersten und zweiten Beleuchtungszeilen 151a und 151b sind in Längsrichtung (y-Richtung) um die Grösse eines halben Hell-Dunkel-Struktur Paars und in x-Richtung um ein Weginkrement $\Delta x$ versetzt, wobei letzteres der Wegstrecke entspricht, die der Messwagens MC im genannten zeitlichen Abstand der beiden Beleuchtungszeilen in x-Richtung zurücklegt. Bezogen auf das Messobjekt S leuchten also die ersten und zweiten Beleuchtungszeilen 151a und 151b jeweils genau dieselben Bildelementzeilen aus. Die Abtastung einer Bildelementzeile erfolgt also (pro Farbkanal) in zwei unmittelbar aufeinanderfolgenden Schritten.

Die Erzeugung der strukturierten Beleuchtungszeilen kann sehr einfach durch geeignete Ausbildung der Masken bzw. Maskenanordnung 13 in der Beleuchtungseinrichtung 10 erfolgen. Die Fig. 10 zeigt einen Ausschnitt einer solchen Maskenanordnung 13, wobei der Einfachheit halber wieder nur die Verhältnisse für einen Farbkanal dargestellt sind. In Realität sind alle Strukturen der Maskenanordnung 13 entsprechend der Anzahl Farbkanäle bzw. Zeilensensoren mehrfach nebeneinander vorhanden.

Die Maskenanordnung 13 enthält (pro Farbkanal) zwei Lochzeilen 131a und 131b, wobei unter Loch zu verstehen ist, dass die Maske an diesen Stellen transparent ist. Die beiden Lochzeilen stehen gegenseitig auf Lücke und verlaufen in einem geringen gegenseitigen Abstand parallel zu einander. Da die Maskenanordnung 13 von der Abbildungslinsenanordnung 14 auf das Messobjekt abgebildet wird, entstehen bei Beleuchtung der Maskenanordnung auf dem Messobjekt die in den Figuren 8 und 9 gezeigten strukturierten Beleuchtungszeilen. Um die im Zusammenhang mit Fig. 9 erläuterten zeitversetzten ersten und zweiten Beleuchtungszeilen 151a und 151b zu erzeugen, werden die Lochzeilen 131a und 131b von zwei separaten Lichtquellenanordnungen 11a und 11b beleuchtet, die von der Mess- und Antriebssteuerung MDC abwechselnd ein- und ausgeschaltet werden. Die praktische Realisierung kann z.B., wie die Fig. 10 zeigt, durch optische Lichtleiter 111a und 111b erfolgen, die Licht von den separaten Lichtquellenanordnungen 11a und 11b zu je einer der beiden Lochzeilen 131a und 131b führen.

Bei Verwendung von entsprechend kleinen Lichtquellen ist es auch möglich, jedem Loch der beiden Lochzeilen 131a und 131b eine eigene Lichtquelle zuzuordnen und die strukturierte Beleuchtung auf diese Weise zu realisieren.

Eine alternative Ausgestaltung der strukturierten Beleuchtung ist in Fig. 11 skizziert. Hier ist spiegelbildlich zur Beleuchtungseinrichtung 10 eine gleiche zweite Beleuchtungseinrichtung 10' vorgesehen, wobei die Maskenanordnungen 13 und 13' jeweils nur die Lochreihen 131a bzw. die Lochreihen 131b aufweisen. Die beiden Beleuchtungseinrichtungen 10 und 10' werden abwechselnd ein- und ausgeschaltet, um die strukturierten Beleuchtungszeilen 151a und 151b gemäss Fig. 9 zu erzeugen.

Die strukturierte Beleuchtung mit abwechselnd beleuchteten und unbeleuchteten Bildelementen eröffnet auch die Möglichkeit einer rechnerischen Streulichtkorrektur, indem an den jeweils unbeleuchteten Bildelementen einer Bildelementzeile eine Dunkelmessung durchgeführt wird und die dabei gewonnenen Dunkelmesswerte zur Schätzung des Streulichtanteils in den Hellmesswerten der benachbarten Bildelemente verwendet wird. Durch geeignete Verrechnung dieser Hell- und Dunkelwerte kann so der Streulichtanteil in den beleuchteten Bildelementen kompensiert werden.. Dies kann z.B. im externen Rechner C aber auch schon in der Mess- und Antriebssteuerung MDC erfolgen.

Eine alternative Ausgestaltung der Übersprechdämpfungsmassnahme besteht in der Realisierung eines geeigneten Testmusters, welches auf dem Messtisch MT aufgebracht ist und vom Messwagen MC bzw. der Messeinrichtung MD angefahren bzw. abgetastet werden kann. Das Testmuster wird typischerweise parallel zu dem schon weiter vorne erwähnten, auf dem Messtisch vorhandenen Weissreferenz-Streifen WR (Fig. 1) angebracht. Das Übersprechverhalten der Messeinrichtung MD kann im Betrieb periodisch, vorzugsweise vor jedem Messlauf, durch Abtasten des Testmusters charakterisiert werden. Diese Charakterisierung erfolgt dabei entlang der Messeinrichtung MD, d.h. in y-Richtung ortsabhängig. Da das bezogen auf ein ausgewähltes Bildelement zusammen mit dem eigentlichen informationstragenden Licht gemessene Streulicht in seiner Intensität sowohl vom ortsabhängigen Übersprechverhalten der Messeinrichtung MD, wie auch von der Bildinformation der benachbarten Bildelemente abhängt, wird für eine rechnerische Kompensation des Übersprechens vorzugsweise beides berücksichtigt. D.h. der Streulichtanteil jedes einzelnen Bildelements wird aufgrund der Bildinformation benachbarter Bildelemente und der ortsabhängigen Charakterisierung der Messeinrichtung MD geschätzt und dann vom dazugehörenden Messwert subtrahiert. Eine solche rechnerische Übersprechdämpfungsmassnahme kann alleine oder auch in Verbindung mit der oben beschriebenen Übersprechdämpfungsmassnahme mit strukturierter Beleuchtung eingesetzt werden.

Für manche Anwendungen ist es erforderlich, auch eine Abtastung im nahen Infrarotbereich durchzuführen. Demzufolge kann die erfindungsgemässe Abtastvorrichtung auch mit einem Infrarotkanal ausgestattet sein. Dazu ist ein weiterer Zeilensensor vorgesehen, dem ein IR-Filter vorgeschaltet ist. Da weiss strahlende Leuchtdioden in der Regel keinen ausreichenden IR-Anteil aufweisen, ist ferner eine zusätzliche IR-Lichtquelle in Form einer linearen Anordnung von IR-Leuchtdioden vorgesehen. Diese IR-Leuchtdioden können z.B. Bestandteil einer zweiten Beleuchtungsanordnung sein, welche analog Fig. 11 spiegelbildlich zur ersten Beleuchtungseinrichtung 10 angeordnet ist. Selbstverständlich kann das IR-Licht über geeignete optische Mittel auch (vor der Maskenanordnung 13) in den Strahlengang der Beleuchtungseinrichtung 10 eingekoppelt werden.

Der Farbkontrollstreifen CMS befindet sich beim Offsetdruck prinzipbedingt immer längs einer bestimmten Seite des Druckbogens (in der Fig. 1 entlang der langen Seite, also in x-Richtung). Wird der Messwagen MC und damit die darin enthaltene Messvorrichtung MD parallel zum Farbkontrollstreifen CMS angeordnet, besteht die Möglichkeit den üblicherweise schmalen Farbkontrollstreifen mit einer nur sehr kleinen Bewegung des Messwagen MC und damit innerhalb sehr kurzer Zeit abzutasten. Die Höhe eines Farbkontrollstreifens macht typischerweise nur 1 % der Höhe eines Druckbogens aus (vgl. dazu Fig. 1), demnach kann der Farbkontrollstreifen alleine typischerweise 100 mal schneller eingelesen werden wie der ganze Bogen. Wird beim Scannen eines Bogens zunächst alleine der Farbkontrollstreifen und erst dann der ganze Bogen abgetastet, kann im Falle elektronisch gesteuerter Druckmaschinen innerhalb sehr kurzer Zeit eine zonenabhängige Regelempfehlung an die Druckmaschinensteuerung übermittelt werden. Druckaufträge können dadurch wesentlich schneller und mit weniger Makulatur eingerichtet werden.

Es versteht sich, dass mit zunehmender Anzahl von Farbkanälen (auf unterschiedliche Wellenlängenbereiche sensibilisierte Zeilensensoren) und gleichzeitig abnehmender Bandbreite der Wellenlängenbereiche eine zunehmend präzise Farbmessung möglich ist. Bei 14-16 Farbkanälen im Abstand von je 20 nm ist die spektrale Auflösung gleich derjenigen klassischer Spektralmessköpfe. Mit zunehmender Anzahl von Farbkanälen steigt aber auch der konstruktive Aufwand und der Rechenaufwand für die Verarbeitung der Messwerte. Umgekehrt ist bei einer zu geringen Anzahl von Farbkanälen keine für die anvisierten Einsatzzwecke ausreichend präzise Farbmessung mehr möglich. Ein optimaler Kompromiss bez. Messgenauigkeit und Herstellkosten liegt gemäss einem Aspekt der Erfindung bei 6-8 Farbkanälen im sichtbaren Bereich plus ev. einem zusätzlichen Kanal im nahen Infrarot-Bereich.

Gemäss einem bevorzugten Ausführungsbeispiel sind für den sichtbaren Bereich des Spektrums sechs Farbkanäle, also sechs Zeilensensoren mit jeweils einem vorgeschalteten Farbfilter vorgesehen. Drei der sechs Farbfilter haben dabei die Durchlasscharakteristiken der für Farbdichtemessungen genormten Farbdichtefilter, die drei anderen Farbfilter werden hinsichtlich der Genauigkeit der Farbmessung optimiert. Die typischen Durchlasskurven dieser sechs Farbfilter sind im Diagramm der Fig. 13 dargestellt. Sie haben Bandpass Charakteristik und typische Halbwertsbreiten von 30 nm bis 60 nm. Es liegen somit nach der Abtastung für jedes Bildelement des Messobjekts sechs Abtastwerte vor, aus denen alle interessierenden weiteren Daten z.B. im externen Rechner C errechnet werden können. Die Farbdichten liegen unmittelbar als Abtastwerte in den drei mit den Farbdichtefiltern ausgestatteten Farbkanälen vor.

Die Berechnung ausreichend genauer Farbwerte X,Y,Z kann für jedes Bildelement aus seinen Abtastwerten gemäss der folgenden Matrizentransformation erfolgen. Für den Fall von 6 Filterkanälen mit den zugehörigen 6 Abtastwerten $M_1...M_6$ sieht die Transformationsmatrix wie folgt aus:

$$
\begin{pmatrix} X \\ Y \\ Z \end{pmatrix} = \begin{pmatrix} k_{11} & k_{12} & k_{13} & k_{14} & k_{15} & k_{16} \\ k_{21} & k_{22} & k_{23} & k_{24} & k_{25} & k_{26} \\ k_{31} & k_{32} & k_{33} & k_{34} & k_{35} & k_{36} \end{pmatrix} \bullet \begin{pmatrix} M_1 \\ M_2 \\ M_3 \\ M_4 \\ M_5 \\ M_6 \end{pmatrix}
$$

Die Koeffizienten $k_{11}....k_{36}$ der Transformationsmatrix können empirisch anhand einer grösseren Zahl von Vergleichsmessungen (einmal mit der erfindungsgemässen Abtastvorrichtung und einmal mit einem präzisen Spektralmessgerät) bestimmt werden. Dieses Vorgehen ist natürlich nicht auf sechs Farbkanäle beschränkt, mit einer geringeren Anzahl von Farbkanälen sind aber die Ergebnisse weniger präzis.

Die Bestimmung der Koeffizienten der Transformationsmatrix mittels Ausgleichsrechnung ermöglicht die Korrektur von Herstellungsfehlern und Toleranzen für die verschiedenen Filter und auch der LEDs. Es muss deshalb für jeden räumlichen Bereich des Messbalkens, welcher einer Einheit aus LED und Filtern entspricht, eine individuelle Transformationsmatrix berechnet werden.

Die CIE Farbwerte X,Y,Z werden nach bekannter Definition (CIE Publikation 15.2) für eine Kombination von Beleuchtungsart und Normalbeobachter bestimmt. Es können deshalb spezifische Transformationsmatritzen für jede Kombination von Beleuchtungsart und Normalbeobachter implementiert werden.

Bei einem reduziertem Set von 6-8 verschiedenen Filtern kann die Genauigkeit der Farbdichtemessung auch durch Anwendung einer analogen Transformationsmatrix verbessert werden. Die Transformation für 6 Filter ist in der folgenden Gleichung dareestellt:

$$
\begin{pmatrix} Dc \\ Dm \\ Dy \end{pmatrix} = \begin{pmatrix} k_{11} & k_{12} & k_{13} & k_{14} & k_{15} & k_{16} \\ k_{21} & k_{22} & k_{23} & k_{24} & k_{25} & k_{26} \\ k_{31} & k_{32} & k_{33} & k_{34} & k_{35} & k_{36} \end{pmatrix} \bullet \begin{pmatrix} D_1 \\ D_2 \\ D_3 \\ D_4 \\ D_5 \\ D_6 \end{pmatrix}
$$

Darin sind $D_1...D_6$ die Dichtewerte der einzelnen Filtermesswerte $M_1:..M_6$. Dc, Dm, Dy sind Dichtewerte gemäss einem bestimmten Dichtestandard aus der ISO Norm 5. Bei einem reduzierten Filterset ist es vorteilhaft einen Dichtestandard mit breitbandigen Filterfunktionen mit Halbwertsbreiten im Bereich von 30 bis 50 nm ,wie zum Beispiel Status E, als Dichtereferenz zu wählen.

Die Koeffizienten $k_{11}....k_{36}$ der Transformationsmatrix können empirisch anhand einer grösseren Zahl von Vergleichsmessungen der entsprechenden Dichtewerte (einmal mit der erfindungsgemässen Abtastvorrichtung und einmal mit einem präzisen Spektralmessgerät) bestimmt werden.

Für spezielle Anwendungen ist es interessant, für jeden Bildpunkt das entsprechende Remissionsspektrum zu kennen. Wenn die Erfassung der Bilddaten nur mit einem reduzierten Abtastset durchgeführt wurde, können angenäherte Spektren aus den Abtastwerten durch Verwendung von Algorithmen aus dem spektralen Color Management erzeugt werden. Diese Techniken sind umfassend in der Dissertation "Navigating the roadblocks to spectral color reproduction: Data-efficient multichannel spectral imaging and spectral color management" von Mitchell R. Rosen , Rochester Institute of Technology, August 2004 beschrieben.

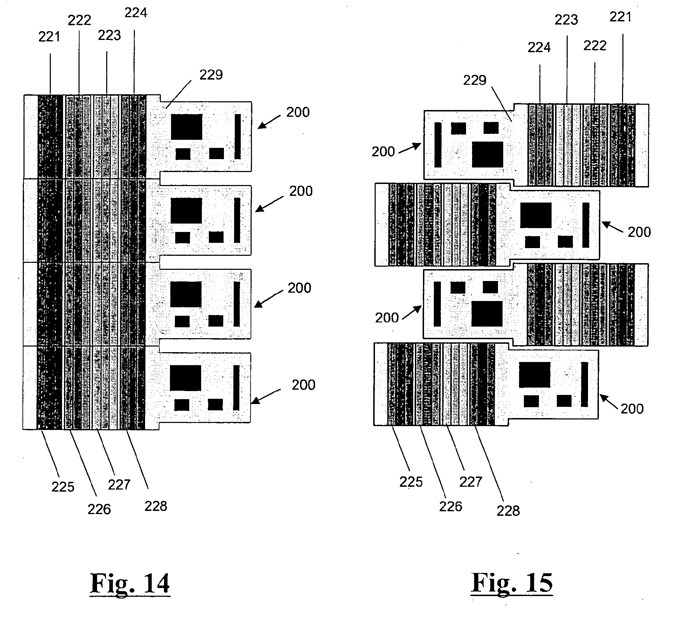

In den vorstehenden Ausführungsbeispielen erstreckt sich die Messeinrichtung über die gesamte Höhe (y-Richtung) des Messobjekts. Da Druckbögen üblicherweise relativ gross sind, kann die Länge der Messeinrichtung in y-Richtung bzw. die Länge der Zeilensensoren dabei leicht 80 cm und mehr betragen. Die Herstellung so langer Zeilensensoren und Farbfilter ist aber technisch sehr aufwändig. Gemäss einem weiteren Aspekt der Erfindung ist daher zumindest die fotoelektrische Empfängereinrichtung 20 modular aufgebaut, wie dies die Figuren 14 und 15 verdeutlichen.

Jedes Modul 200 umfasst eine Leiterplatte 229, auf der im Beispiel vier relativ kurze Zeilensensoren 221-224 und die zugehörigen Farbfilter 225-228 sowie zu den Zeilensensoren gehörige, nicht näher bezeichnete Elektronikbauteile montiert sind. Jedes Modul 200 ist z.B. 25mm lang (in y-Richtung). Im Beispiel der Fig. 14 sind vier Module 200 gleichsinnig nahtlos aneinandergereiht. Die nahtlose Aneinanderreihung kann technisch problematisch sein. Deshalb sind im Beispiel der Fig. 15 dieselben vier Module 200 abwechselnd gegensinnig aneinandergereiht, d.h. jedes zweite Modul ist um 180° gedreht. Dabei überlappen sich benachbarte Module geringfügig in y-Richtung, so dass keine Abtastlücken entstehen können. Allerdings wird dadurch aber der Steuerungsaufwand grösser, weil die Sensorzeilenabschnitte der einzelnen Module zeitlich versetzt über ein und derselben Bildelementzeile des Messobjekts stehen.

Es ist auch möglich, die Länge (in y-Richtung) der Messeinrichtung MD grundsätzlich kürzer zu wählen als den zu überstreichenden Abtastbereich in y-Richtung. In diesem Fall würde die Abtastung des ganzen Messobjekts in zwei oder mehreren Abtastdurchgängen (Bewegungen des Messwagens MC in x-Richtung über das Messobjekt) erfolgen, wobei die Messvorrichtung MD im Messwagen MC für jeden Abtastdurchgang entsprechend in y-Richtung versetzt würde.

Ferner ist es auch denkbar, in der Messeinrichtung Module 200 mit unterschiedlichen Farbkanälen einzusetzen, um so die Gesamtzahl der Farbkanäle zu erhöhen. Beispielsweise könnte etwa ein Modul vier erste Farbkanäle und ein benachbartes Modul vier von den ersten verschiedene zweite Farbkanäle aufweisen. Zusammen gäbe dies dann eine farbliche Auflösung von acht Farbkanälen. Auch in diesem Fall würde die vollständige Abtastung des Messobjekts mindestens zwei oder mehrere Abtastdurchgänge erfordern.

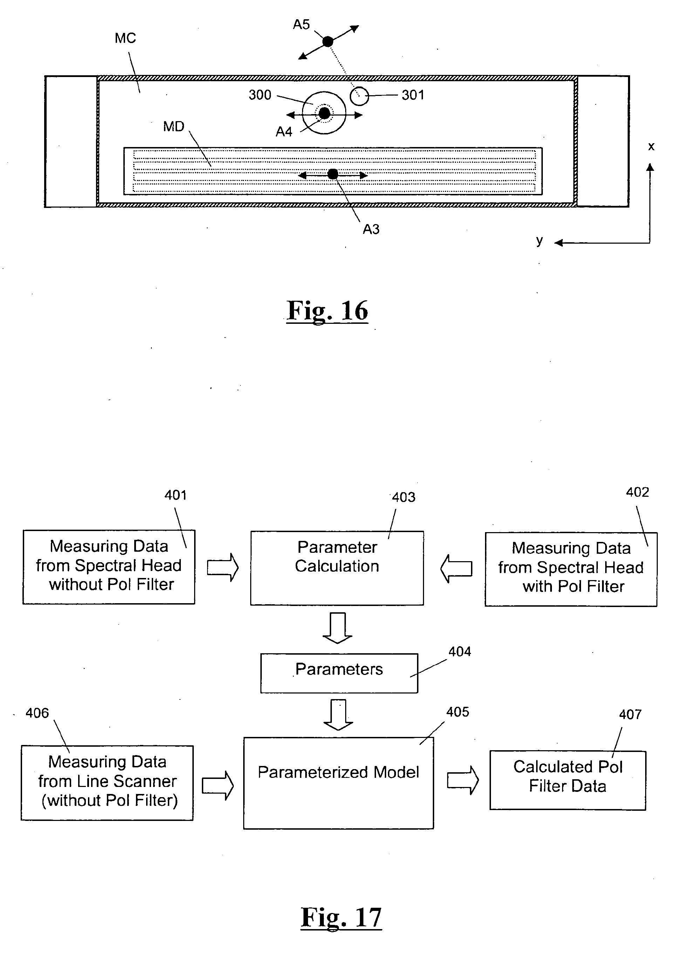

Gemäss einem weiteren wichtigen Aspekt der Erfindung kann im Messwagen MC zusätzlich zur beschriebenen, mit Zeilensensoren ausgestatteten Messeinrichtung MD noch ein unabhängiger Spektralmesskopf für die spektrale Ausmessung einzelner Bildelemente vorgesehen sein, so wie dies in der Fig. 16 schematisch angedeutet ist. Dieser Spektralmesskopf 300 ist über einen in der Figur durch einen Pfeil A4 symbolisch angedeuteten motorischen Antrieb unabhängig von der Messeinrichtung in y-Richtung bewegbar und damit in Verbindung mit der Bewegung des Messwagens MC in x-Richtung über jedem beliebigen Bildelement des Messobjekts positionierbar. Der Spektralmesskopf 300 und sein Antrieb in y-Richtung wird selbstverständlich auch von der Mess- und Steuereinrichtung MDC gesteuert. Vorzugsweise ist der Spektralmesskopf 300 mit einem Polarisationsfilter 301 ausgestattet, das ferngesteuert in den Messstrahlengang eingeführt bzw. wieder aus diesem entfernt werden kann, so dass wahlweise Spektralmessungen mit und ohne Polarisationsfilter möglich sind. Die Bewegung des Polarisationsfilters 301 ist in der Fig. 16 durch einen Pfeil A5 symbolisiert. Um Messungen mit verschiedenen Filtern zeitgleich durchführen zu können, kann der Einsatz von mehr als einem unabhängigen Spektralmesskopf sinnvoll sein, um z.B. mit zwei Spektralmessköpfen Messungen mit und ohne Polarisationsfilter zu erhalten.

Der Spektralmesskopf 300 wird zu hochpräzisen Messungen an relativ wenigen ausgewählten Bildelementen des Messobjekts S eingesetzt. Typischerweise wird damit der auf Druckbögen üblicherweise vorhandene Farbkontrollstreifen CMS (Fig.1) ausgemessen. Dies kann in einem eigenen Abtastdurchlauf oder aber auch zusammen mit dem oder einem der Abtastdurchläufe der Messeinrichtung MD erfolgen. In beiden Fällen ist es aufgrund der a priori nicht genau bekannten Lage von ausgewählten Bildelementen besonders vorteilhaft, die von der Messeinrichtung mit den Zeilensensoren erfasste Bildinformation dahingehend zu interpretieren, dass diese zur Positionierung des unabhängigen Spektralmesskopfes auf spezifische Bildelemente verwendet werden kann. So kann insbesondere die genaue Lage des Farbkontrollstreifens CMS während des Messvorgangs bestimmt werden und damit der unabhängige Spektralmesskopf gezielt über den interessierenden Bildelementen positioniert werden.

Der Spektralmesskopf 300 wird auch für die Berechnung von spektralen Bilddaten verwendet. Mit dem Spektralmesskopf 300 wird der Farbkontrollstreifen eingemessen. Im Farbkontrollstreifen CMS befinden sich Kontrollfelder (Volltonfelder und Rasterdruckfelder) von allen am Druckprozess beteiligten Farben. Für diese Felder existieren nach der Messung präzise Remissionsspektren. Diese Remissionsspektren des CMS bilden die Basis für die Berechnung der Remissionsspektren aus den Bilddaten. Es ist bekannt, dass anhand der Spektren der Volltöne und einiger Rasterfeldern das Spektrum für jeden beliebigen Bildpunkt mit einem Modell beschrieben werden kann, wenn für die Bilddaten die Rastertonwerte des Farbaufbaus bekannt sind. Ein Druckmodell basiert in der Regel auf der Theorie von Neugebauer für die Beschreibung des Rasterdruckprozesses und den Theorien von Kubelka Munk oder Hoffmann Schmelzer für die Simulation von Volltondruckproben. Die Bilddaten sind durch eine reduzierten Anzahl von Abtastwerten definiert. Durch die Kenntnis von effektiv gemessenen Bildmesswerten kann die Genauigkeit der Spektrenberechnung mit dem Druckmodell verbessert werden. Das Druckmodell beschreibt das Spektrum in jedem Bildpunkt als gewichtete Kombination der Grundspektren. Diese Grundspektren können auch in Funktion der Abtastwerte der Bildmesstechnik parametrisiert werden. Die Bestimmung dieser Funktion erfolgt über eine Ausgleichsrechnung mit den Messwerten des Farbkontrollstreifens CMS, welche mit beiden Messmethoden (Messeinrichtung MD und Spektralmesskopf 300) bestimmt wurden.

Der Spektralmesskopf 300 kann beispielsweise auch für die weiter vorne erwähnten Vergleichsmessungen zur Ermittlung der Koeffizienten der Transformationsmatrix eingesetzt werden.

In der Messeinrichtung MD mit den Zeilensensoren sind Polarisationsfilter aus verschiedenen Gründen schlecht einsetzbar, z.B. weil dadurch das Messlicht zu stark gedämpft würde. Anderseits wären aber für viele Anwendungen Messungen mit Polarisationsfilter erforderlich oder zumindest günstig. Gemäss einem weiteren Aspekt der Erfindung werden nun aus den von der Abtasteinrichtung MD ohne Polarisationsfilter erzeugten Abtastwerten Polfilter-Abtastwerte berechnet, die einer Abtastung unter Einsatz von Polarisationsfiltern entsprechen. Diese Umrechnung erfolgt beispielsweise im externen Rechner C anhand eines parametrisierten Modells, dessen Parameter aus mit dem Spektralmesskopf 300 an ausgewählten Bildelementen mit und ohne Polarisationsfilter 301 gemessenen spektralen Abtastwerten bestimmt werden. Als ausgewählten Bildelemente werden typischerweise diejenigen des Farbmessstreifens CMS im Messobjekt S verwendet. Die Fig. 17 verdeutlicht diese Zusammenhänge. Aus den mit und ohne Polarisationsfilter mit dem Spektralmesskopf ermittelten Messdaten 401 bzw. 402 werden in einer Parameterberechnungsstufe 403 Parameter 404 für das Modell gebildet und dem Modell 405 zugeführt. Dieses rechnet dann die ohne Polarisationsfilter ermittelten Messdaten 406 der Zeilensensoren in entsprechende Polfiltermessdaten 407 um.

Diese Methode kann auch ohne seperaten Spektralmesskopf implementiert werden. In diesem Fall wird der Druckbogen mit der Messeinrichtung MD ohne Polarisationsfilter komplett eingemessen. Dann wird in die Messeinrichtung MD ein Polarisationsfilter in den Beleuchtungs- und Sammelkanal eingeschwenkt und in einem separaten speziellen Abtastgang mit ungefähr 10 mal kleinerer Abtastgeschwindigkeit nur ein Teilbereich des Bildes mit Polarisationsfilter ausgemessen. Dieser Teilbereich beinhaltet vorteilhaft den Farbkontrollstreifen CMS. Durch die geringere Abtastgeschwindigkeit stehen die beim Einsatz von Polarisationsfiltern wegen des Lichtverlusts erforderlichen, ungefähr 10 mal längeren Messzeiten (Integrationszeiten) zur Verfügung. Die Bestimmung der Umrechnungsparameter und die Umrechnung der Messwerte erfolgt dann analog der anhand der Fig. 17 erläuterten Methode, wobei aber an die Stelle der vom Spektralmesskopf ermittelten Messwerte 401 und 402 die aus dem ausgewählten Teilbereich des Bildes stammenden Messwerte der Messeinrichtung MD mit und ohne Polarisationsfilter treten.

**Patentansprüche**

1.  Abtastvorrichtung zur bildelementweisen fotoelektrischen Ausmessung eines Messobjekts, insbesondere eines vorzugsweise mehrfarbig bedruckten Druckbogens, mit einem Messtisch (MT), auf welchem das Messobjekt (S) für die Ausmessung befestigbar ist, mit einer über die Oberfläche des Messtischs (MT) bewegbaren Messeinrichtung (MD), welche gleichzeitig jeweils eine Vielzahl von in einer Zeile liegenden Bildelementen des am Messtisch (MT) befestigten Messobjekts (S) fotoelektrisch abtastet und für jedes abgetastete Bildelement zugehörige Messsignale erzeugt, mit einer Antriebseinrichtung (D), welche die Messeinrichtung (MD) über das Messobjekt (S) bewegt, so dass sämtliche Bildelemente des Messobjekts (S) erfassbar sind, mit einer Mess- und Antriebssteuerung (MDC) für die Messeinrichtung (MD) und die Antriebseinrichtung (D) und mit einer Verarbeitungseinrichtung (C), um die von der Messeinrichtung (MD) erzeugten Messsignale aus den abgetasteten Bildelementen des Messobjekts (S) aufzubereiten und auszuwerten, wobei die Messeinrichtung (MD) eine Beleuchtungseinrichtung (10) zur Beaufschlagung der Bildelemente des Messobjekts (S) mit im wesentlichen weissem Beleuchtungslicht unter einem definierten, für Farbmessanwendungen geeigneten Einfallswinkelbereich aufweist, wobei die Messeinrichtung (MD) eine wellenlängenbereichsselektive fotoelektrische Empfängereinrichtung (20) aufweist, und wobei die Messeinrichtung (MD) Optikmittel (30) aufweist, die von beleuchteten Bildelementen des Messobjekts (S) remittiertes Messlicht unter einem definierten, für Farbmessanwendungen geeigneten Ausfallswinkelbereich auffangen und auf die fotoelektrische Empfängereinrichtung (20) leiten, **dadurch gekennzeichnet, dass** die Beleuchtungseinrichtung (10) zur Beaufschlagung eines streifenförmigen Beleuchtungsbereichs (15) des Messobjekts ausgebildet ist, wobei im wesentlichen jedes im streifenförmigen Beleuchtungsbereich befindliche und beleuchtete Bildelement unter einem definierten, für Farbmessanwendungen geeigneten Einfallswinkelbereich mit Beleuchtungslicht beaufschlagt wird, dass die fotoelektrische Empfängereinrichtung (20) mehrere parallel im Abstand angeordnete fotoelektrische Zeilensensoren (21-24) aufweist, die parallel zur Längserstreckung des Beleuchtungsbereichs und parallel zur Oberfläche des Messtischs (MT) ausgerichtet und durch vorgeschaltete Farbfilter (25-28) auf unterschiedliche Wellenlängenbereiche sensibilisiert sind, dass die Optikmittel (30) eine der Anzahl Zeilensensoren (21-24) entsprechende Anzahl von linienförmigen Optikanordnungen (31-34) aufweisen, die von Bildelementen in einer der Anzahl Zeilensensoren (21-24) entsprechenden Anzahl von Bildzeilen (41-44) des Beleuchtungsbereichs remittiertes Messlicht auf je einen der Zeilensensoren (21-24) lenken, wobei das Messlicht in im wesentlichen jedem Bildelement unter einem definierten, für Farbmessanwendungen geeigneten Ausfallswinkelbereich aufgefangen wird, und dass die Messeinrichtung (MD) Übersprechdämpfungsmittel (37, 25-28, 151-156) aufweist, welche die gegenseitige Beeinflussung der Messsignale aus benachbarten Bildelementen des Messobjekts reduzieren.

2. Vorrichtung nach Anspruch 1, **dadurch gekennzeichnet, dass** die Beleuchtungseinrichtung (10) zur Erzeugung einer der Anzahl Zeilensensoren (21-24) entsprechenden Anzahl von ersten Beleuchtungszeilen (151-156; 151a) mit Hell-Dunkel-Struktur ausgebildet ist, wobei sich in jeder Beleuchtungszeile beleuchtete und unbeleuchtete Felder von je im wesentlichen der Grösse eines Bildelements oder eines Vielfachen davon gegenseitig abwechseln.

3. Vorrichtung nach Anspruch 2, **dadurch gekennzeichnet, dass** die Beleuchtungseinrichtung (10) zur Erzeugung einer der Anzahl Zeilensensoren (21-24) entsprechenden Anzahl von zweiten Beleuchtungszeilen (151b) mit Hell-Dunkel-Struktur ausgebildet ist, wobei sich in jeder Beleuchtungszeile beleuchtete und unbeleuchtete Felder von je im wesentlichen der Grösse eines Bildelements oder eines Vielfachen davon gegenseitig abwechseln und wobei beleuchtete Felder der ersten Beleuchtungszeilen (151a) in Längsrichtung (y) der Beleuchtungszeilen an der Position der unbeleuchteten Felder der zweiten Beleuchtungszeilen (151b) liegen und umgekehrt, und dass die Beleuchtungseinrichtung (10) dazu ausgebildet ist, die ersten und zweiten Beleuchtungszeilen (151a, 151b) zeitlich abwechselnd zu erzeugen.

4. Vorrichtung nach Anspruch 3, **dadurch gekennzeichnet, dass** die ersten Beleuchtungszeilen (151a) in Richtung (x) quer zu ihrer Längsrichtung (y) um ein Weginkrement (Δx) gegenüber den entsprechenden zweiten Beleuchtungszeilen (151b) versetzt sind.

5. Vorrichtung nach einem der Ansprüche 2-4, **dadurch gekennzeichnet, dass** die Beleuchtungseinrichtung (10) für jedes Feld der ersten und zweiten Beleuchtungszeilen (151a, 151b) eine eigene Lichtquelle aufweist.

6. Vorrichtung nach einem der Ansprüche 2-4, **dadurch gekennzeichnet, dass** die Beleuchtungseinrichtung (10) für die Erzeugung der ersten und zweiten Beleuchtungszeilen (151a, 151b) separate Lichtquellen (11a, 11b) aufweist.

7. Vorrichtung nach einem der Ansprüche 2-4, **dadurch gekennzeichnet, dass** die Beleuchtungseinrichtung (10) für die Erzeugung der Beleuchtungszeilen (151a, 151b) strukturierte Masken (13) aufweist, die in den Beleuchtungsbereich (15) abgebildet werden.

8. Vorrichtung nach einem der vorangehenden Ansprüche, **dadurch gekennzeichnet, dass** die Beleuchtungseinrichtung (10) eine Lichtquelle in Form einer linienförmigen Anordnung von im wesentlichen weisses Licht emittierenden Leuchtdioden (11) aufweist.

9. Vorrichtung nach einem der vorangehenden Ansprüche, **dadurch gekennzeichnet, dass** die Beleuchtungseinrichtung (10) zusätzlich eine Lichtquelle in Form einer linienförmigen Anordnung von Licht im nahen Infrarotbereich emittierenden Leuchtdioden aufweist.

10. Vorrichtung nach einem der vorangehenden Ansprüche, **dadurch gekennzeichnet, dass** die linienförmigen Optikanordnungen (31-34) aus einer parallelen Aneinanderreihung von Gradientenindex-Linsen (31a) bestehen.

11. Vorrichtung nach einem der vorangehenden Ansprüche, **dadurch gekennzeichnet, dass** die Zeilensensoren (21-24) als integrierte CIS- (contact image sensor)-Elemente ausgebildet sind.

12. Vorrichtung nach einem der vorangehenden Ansprüche, **dadurch gekennzeichnet, dass** wenigstens sechs Zeilensensoren vorgesehen und durch vorgeschaltete Farbfilter auf unterschiedliche Wellenlängenbereiche sensibilisiert sind.

13. Vorrichtung nach Anspruch 12, **dadurch gekennzeichnet, dass** drei der Farbfilter die Durchlässigkeitscharakteristik der genormten Filter für die Farbdichtemessung aufweisen und drei der Farbfilter für die Farbmessung optimiert sind.

**14.** Vorrichtung nach einem der vorangehenden Ansprüche, **dadurch gekennzeichnet, dass** die Übersprechdämpfungsmittel Trennwände (37) zwischen den linienförmigen Optikanordnungen (31-34) umfassen.

**15.** Vorrichtung nach einem der vorangehenden Ansprüche, **dadurch gekennzeichnet, dass** zur Reduktion von Übersprecheffekten die Farbfilter (25-28) schräg zum Hauptstrahlengang des auf die Zeilensensoren (21-24) auftreffenden Messlichts gestellt sind.

**16.** Vorrichtung nach einem der vorangehenden Ansprüche, **dadurch gekennzeichnet, dass** die Länge der Messeinrichtung MD kleiner ist als der maximal zu überstreichenden Abtastbereich, und dass die Mess- und Antriebssteuerung (MDC) dazu ausgebildet ist, die Abtastung des ganzen Messobjekts (S) in zwei oder mehreren Abtastdurchgängen durchzuführen, wobei die Messvorrichtung (MD) für jeden Abtastdurchgang in Längsrichtung versetzt wird.

**17.** Vorrichtung nach einem der vorangehenden Ansprüche, **dadurch gekennzeichnet, dass** die Zeilensensoren (21-24) mit den zugehörigen Farbfiltern (25-28) modular aufgebaut sind, wobei zwei oder mehrere Module in Längsrichtung der Zeilensensoren nebeneinander angeordnet sind.

**18.** Vorrichtung nach Anspruch 17, **dadurch gekennzeichnet, dass** die Zeilensensoren (21-24) in benachbarten Modulen auf unterschiedliche Wellenlängenbereiche sensibilisiert sind.

**19.** Vorrichtung nach einem der vorangehenden Ansprüche, **dadurch gekennzeichnet, dass** sie zusätzlich zur Messeinrichtung (MD) noch wenigstens einen Spektralmesskopf (300) zur spektralen Ausmessung einzelner Bildelemente aufweist, wobei dieser Spektralmesskopf (300) unabhängig von der Messeinrichtung (MD) in Längsrichtung (y) derselben motorisch angetrieben beweglich ist.

**20.** Vorrichtung nach Anspruch 19, **dadurch gekennzeichnet, dass** der Spektralmesskopf (300) mit einem in den Messstrahlengang einbringbaren und wieder entfernbaren Polarisationsfilter (301) ausgestattet ist, so dass Spektralmessungen mit und ohne Polarisationsfilter durchführbar sind.

**21.** Vorrichtung nach Anspruch 20, **dadurch gekennzeichnet, dass** Rechenmittel (C) vorgesehen sind, welche die von den Zeilensensoren (21-24) ohne Verwendung eines Polarisationsfilters erzeugten Messwerte (406) anhand eines parametrisierten Modells (405) und vom Spektralmesskopf (300) in ausgewählten Bildelementen mit und ohne Polarisationsfilter (301) ermittelten Messwerten (401, 402) in Polarisationsfilter-Messwerte (407) umrechnen.

**22.** Vorrichtung nach einem der vorangehenden Ansprüche, **dadurch gekennzeichnet, dass** die Messeinrichtung (MD) mit entfernbaren Polarisationsfiltern ausgestattet ist und Rechenmittel (C) vorgesehen sind, welche die von den Zeilensensoren (21-24) ohne Verwendung eines Polarisationsfilters erzeugten Messwerte (406) anhand eines parametrisierten Modells (405) und von den Zeilensensoren (21-24) nur in ausgewählten Bildelementen mit und ohne Polarisationsfilter ermittelten Messwerten (401, 402) in Polarisationsfilter-Messwerte (407) umrechnen.

**23.** Vorrichtung nach einem der vorangehenden Ansprüche, **dadurch gekennzeichnet, dass** Rechenmittel (C) vorgesehen sind, welche die von der Messeinrichtung (MD) erzeugten Messwerte ($M_1$-$M_6$) anhand eines Modells oder durch Transformation in normgerechte Farbwerte (X,Y,Z) oder Farbdichtewerte (Dc, Dm, Dy) umrechnen.

**24.** Vorrichtung nach Anspruch 20, **dadurch gekennzeichnet, dass** Rechenmittel (C) vorgesehen sind, welche die von den Zeilensensoren (21-24) erzeugten Messwerte anhand eines parametrisierten Modells in Spektralmesswerte umrechnen, wobei die Parameter des Modells aus Messwerten bestimmt werden, die in ausgewählten Bildelementen sowohl mittels der Zeilensensoren (21-24) als auch mittels des Spektralmesskopfs (300) erzeugt wurden.

**25.** Vorrichtung nach einem der vorangehenden Ansprüche, **dadurch gekennzeichnet, dass** die Beleuchtungseinrichtung (10) zur Erzeugung eines im wesentlichen homogenen Beleuchtungsstreifens ausgebildet ist, und dass Rechenmittel (C) vorgesehen sind, um eine rechnerische Streulichtkorrektur anhand von Messungen an einem auf dem Messtisch (MT) vorgesehenen Testmuster durchzuführen.

**26.** Vorrichtung nach einem der vorangehenden Ansprüche, **dadurch gekennzeichnet, dass** die Optikmittel (30) anstelle der linienförmigen Optikanordnungen (31-34) mindestens eine Kombination aus einer telezentrischen Feldlinse (311) und einer Verkleinerungsoptik (321) umfasst, wobei jeweils ein Abtastlinienabschnitt (41') verkleinert auf einen Sensorzeilenabschnitt (21') abgebildet wird.

27. Vorrichtung nach einem der vorangehenden Ansprüche, **dadurch gekennzeichnet, dass** die Mess- und Antriebssteuerung (MDC) dazu ausgebildet ist, in einem speziellen Abtastgang nur ausgewählte Bildelemente des Messobjekts (S), vorzugsweise einen auf dem Messobjekt (S) enthaltenen Farbmessstreifen (CMS), mit geringerer Abtastgeschwindigkeit abzutasten, so dass in diesem ersten Abtastgang ausreichend lange Messzeiten für den Einsatz von Polarisationsfiltern zur Verfügung stehen.

Fig. 1

Fig. 2

**Fig. 3**

**Fig. 4**

**Fig. 5**

**Fig. 6**

**Fig. 7**

**Fig. 11**

**Fig. 8**

151 152 153 154 155 156

**Fig. 9**

S

151a — 151b

Δx

131a    131b

11a

111a

11a

13

11b

111b

11b

**Fig. 10**

# Fig. 12

Spektraler Strahlungsfluss weisse LED und Dichte Status E Filter

# Fig. 13

**Fig. 14**

**Fig. 15**

MC

A5

MD

300 — 301

A4

A3

x

y

**Fig. 16**

| | | |
|---|---|---|
| Measuring Data from Spectral Head without Pol Filter 401 | ⇒ Parameter Calculation 403 ⇐ | Measuring Data from Spectral Head with Pol Filter 402 |

⇓

Parameters 404

⇓

| | | |
|---|---|---|
| Measuring Data from Line Scanner (without Pol Filter) 406 | ⇒ Parameterized Model 405 ⇒ | Calculated Pol Filter Data 407 |

**Fig. 17**

**Fig. 18**

**Europäisches Patentamt**

## EUROPÄISCHER RECHERCHENBERICHT

Nummer der Anmeldung

EP 04 02 5620

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 196 50 223 A1 (HEIDELBERGER DRUCKMASCHINEN AG, 69115 HEIDELBERG, DE) 10. Juni 1998 (1998-06-10) | 1 | H04N1/028 |
| A | * Zusammenfassung * * Abbildungen 1,2 * * Spalte 1, Zeile 1 - Zeile 60 * ----- | 2-27 | |
| A | US 4 449 147 A (OGASAWARA ET AL) 15. Mai 1984 (1984-05-15) * Zusammenfassung * ----- | 1-27 | |

RECHERCHIERTE SACHGEBIETE (Int.Cl.7)

H04N

Der vorliegende Recherchenbericht wurde für alle Patentansprüche erstellt

| Recherchenort | Abschlußdatum der Recherche | Prüfer |
|---|---|---|
| Den Haag | 27. Mai 2005 | Stoffers, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

**EP 1 655 946 A1**

**ANHANG ZUM EUROPÄISCHEN RECHERCHENBERICHT
ÜBER DIE EUROPÄISCHE PATENTANMELDUNG NR.**

EP 04 02 5620

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2005

| Im Recherchenbericht angeführtes Patentdokument | | Datum der Veröffentlichung | Mitglied(er) der Patentfamilie | | Datum der Veröffentlichung |
|---|---|---|---|---|---|
| DE 19650223 | A1 | 10-06-1998 | DE | 59709003 D1 | 30-01-2003 |
| | | | EP | 0847187 A2 | 10-06-1998 |
| | | | JP | 10178516 A | 30-06-1998 |
| | | | US | 6028682 A | 22-02-2000 |
| US 4449147 | A | 15-05-1984 | JP | 56072573 A | 16-06-1981 |
| | | | DE | 3043677 A1 | 10-09-1981 |

EPO FORM P0461

Für nähere Einzelheiten zu diesem Anhang : siehe Amtsblatt des Europäischen Patentamts, Nr.12/82

23